# EUROPEAN PATENT APPLICATION

(11) **EP 0 841 012 A1**
(43) Date of publication of application: **13.05.1998**
(21) Application number: 97202773.4
(22) Date of filing: 11.09.1997
(51) Int. Cl.: A23L 1/36, A23P 1/08

(54) **Process for preparing coated nuts**

(30) Priority: 30.09.1996 NL 1004143
(71) Applicant: Imko Gelria B.V., 7005 AG Doetinchem (NL)
(72) Inventor: Zwiekhorst, Miriam, 7255 XE Hengelo (NL)
(74) Representative: Lips, Hendrik Jan George, Ir.

(57) **Abstract**

Method of preparing a snack product, in particular a snack product with its core comprising a nut (11) or a similar product, such as a peanut or another type of nut, said method comprising the following steps:
a) dragging the nuts, to wit applying a paste layer of flour by means of spraying liquid;
b) applying an adhesive layer on the nuts;
c) breadcrumbing the nuts, to wit applying a layer of breadcrumbs;
d) frying the nuts in oil at a temperature between 150 and 175°C for 5 to 8 minutes, or roasting them in hot air;
e) flavouring the nuts when they're still warm, that is, applying flavourings, aromatic substances and colourants onto the nuts; and
f) cooling the nuts.

## Description

The invention relates to a method of preparing a snack product, in particular a snack product with its core comprising a nut or a similar product, such as a peanut or another type of nut.

Snack products having a nut or a similar core as main constituent are known per se. For the sake of simplicity, hereinafter we will use the term "nuts", although other cores may be used as well.

The object of the invention is to provide a method of preparing a snack product such that one obtains a snack product meeting high requirements regarding taste, colour and "bite" of the product obtained, in which said properties can be easily adapted to the requirements stated.

According to the invention, this is achieved by performing the following steps:
a) dragging the nuts, to wit applying a paste layer of flour by means of spraying liquid;
b) applying an adhesive layer on the nuts;
c) breadcrumbing the nuts, to wit applying a layer of breadcrumbs;
d) frying the nuts in oil at a temperature between 150 and 175°C for 5 to 8 minutes, or roasting them in hot air, as a result of which the first coating expands;
e) flavouring the nuts when they're still warm, that is, applying flavourings, aromatic substances and colourings onto the fried nuts; and
f) subsequent cooling of the nuts.

Preceding stage a), the nuts can be cleaned so that all specimen not meeting the requirements and all contaminations will be removed.

After cooling of the nuts, by "hand-picking" it can be provided for that possibly fried together specimen and specimen not meeting the requirements are removed. Thus, this "hand-picking", as the term implies, will have to be done by hand by persons inspecting the product. Obviously, one could also think of equipment capable of this action.

When applying the method, the snack product obtained can be given various flavours and aromas by employing various flavourings, aromatic substances and herbs. These can also be added to the constituents during applying an adhesive layer or breadcrumbing of the nuts. Due to this, a wide variety of desired flavour, aromatic and "bite" properties of the product will be achieved.

By applying certain colourants it can also be provided for that the snack product has a certain colour. Thus, with the use of paprika, for example, the snack product will preferably have a somewhat red, spotted, colour, whereas another colour will be chosen with the use of other flavourings and aromatic substances.

After applying the method described above, the obtained snack product can additionally be sieved. Thereby, crumbs can be removed before the product is packaged.

For dragging, applying the adhering layer and breadcrumbing the nuts, one can use flour in the form of a mixture of flour of grains, of starch which might be modified, sugar, salt and like products.

On applying the adhering layer one uses a mixture obtained by mixing water and adhesive agent which is applied onto the nuts by battering or gumming.

With breadcrumbing the nuts one uses a batter which will generally be less viscous than that which is used with applying the adhesive layer, but that can have approximately the same composition. The grains will be coarser, so that the surface of the finally obtained product will have a relief structure.

Dragging of the nuts can take place by bringing the nuts into a drum rotatable around a substantially horizontal axis, in which the flour is poured onto the nuts while simultaneous spraying water onto them. This process can be controlled manually.

The invention is explained further by way of the drawing, in which:
Fig. 1 shows a diagram of the method according to the invention; and
Fig. 2 shows schematically a cross-section, on a highly enlarged scale, of a snack product obtained by applying the method according to the invention.

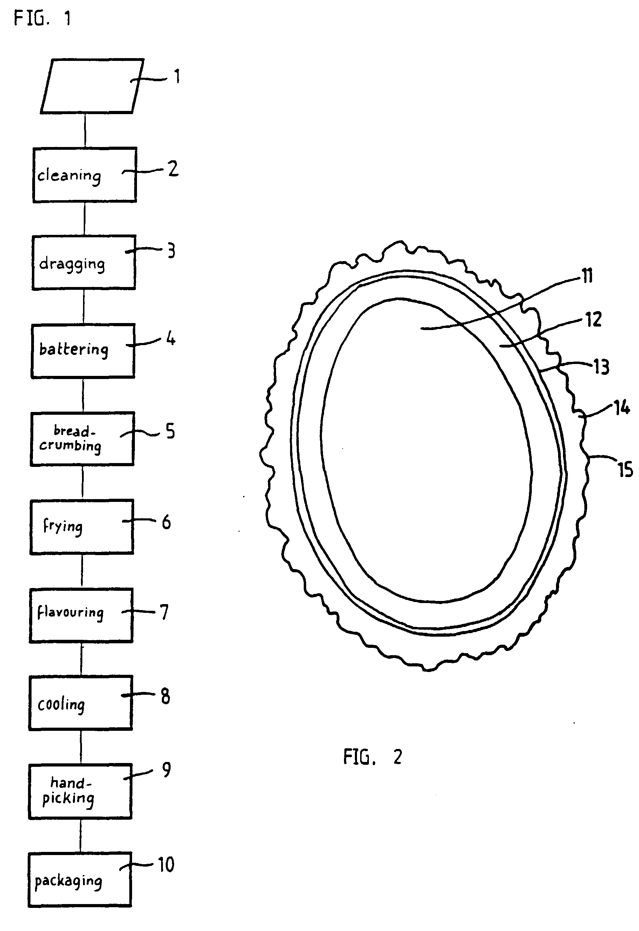

Fig. 1 shows the consecutive stages as they can be applied according to the invention in the preparation of the snack product. The number 1 indicates the basic product that, as stated above, can consist of nuts, such as peanuts and the like, or cores of other constituents.

The basic product is cleaned at 2, so that only good nuts will be supplied to the subsequent stage 3. In said stage 3, the nuts are dragged, in stage 4 they are provided with an adhesive layer and subsequently they are breadcrumbed in stage 5.

The breadcrumbed nuts are subsequently fried in stage 6 and in stage 7, when they are still warm, the nuts are flavoured, that is, aromatic subtances, flavourings and colourants are added. This takes place when the nuts are still warm, since then the aromatic substances and flavourings will adhere well to the nuts. After that, in stage 8 the nuts are cooled. Subsequently, in stage 9 the nuts are sorted by "hand-picking", that is, the nuts not meeting the quality requirements are removed from the lot. Subsequently, the nuts are packaged in stage 10.

Fig. 2 shows schematically in cross-section a snack product obtained by applying the method described above. As it appears, the nut 11 is provided with a coating layer 12 applied by dragging. On top of said layer, the adhesive layer 13 is applied, and on top of that layer is the layer of breadcrumbs 14. The breadcrumbs 14 have a coarse structure, so that the obtained product has a relief structure. After frying the nuts, additionally, flavourings and aromatic substances 15 were applied on the surfaces thereof, possibly in the form of herbs and the like.

It will be obvious, that only one possible embodiment of a method according to the invention and of a snack product obtained by it, has been illustrated in the drawing and described above, and that many modifications can be made without leaving the inventive idea, as described in the claims.

## Claims

1. Method of preparing a snack product, in particular a snack product having its core comprising a nut (11) or a similar product, such as a peanut or another type of nut, characterized in that said method comprises the following steps:
a) dragging the nuts, to wit applying a paste layer of flour by means of spraying liquid;
b) applying an adhesive layer on the nuts;
c) breadcrumbing the nuts, to wit applying a layer of breadcrumbs;
d) frying the nuts in oil at a temperature between 150 and 175°C for 5 to 8 minutes, or roasting them in hot air, as a result of which the first coating expands;
e) flavouring the nuts when they're still warm, that is, applying flavourings, aromatic substances and colourings onto the fried nuts; and
f) subsequent cooling of the nuts.

2. Method according to claim 1, characterized in that preceding stage a), the nuts are cleaned so that all specimen not meeting the requirements and all contaminations are removed.

3. Method according to claim 1 or 2, characterized in that after cooling the nuts, "hand-picking" can provide for that possibly fried together specimen and specimen not meeting the requirements are removed.

4. Method according to one of the preceding claims, characterized in that flavourings and aromatic substances or herbs are added to the constituents used for dragging, applying an adhesive layer or breadcrumbing.

5. Method according to one of the preceding claims, characterized in that for dragging the nuts one uses flour in the form of a mixture of flour of grains, of starch which might be modified, sugar, salt and like products.

6. Method according to one of the preceding claims, characterized in that with applying an adhesive layer one uses a mixture obtained by mixing water and adhesive agent which is applied onto the nuts by battering or gumming.

7. Method according to one of the preceding claims, characterized in that with breadcrumbing the nuts one uses a mixture which is less viscous than that which is used with applying the adhesive layer, and in which the grains will be coarser.

8. Method according to one of the preceding claims, characterized in that dragging takes place by bringing the nuts into a drum rotatable around a substantially horizontal axis, in which the flour is poured onto the nuts while simultaneous spraying water onto them.

9. Snack product obtained applying the method as described in one or more of the preceding claims.

10. Snack product according to claim 10, characterized in that the core of the product is formed by a nut (11) or a similar product, such as a peanut or another type of nut, said nut being provided with a coating layer (12) applied by dragging, a layer (13) applied on said layer by applying an adhesive layer, and a layer of breadcrumbs (14) on top of that.
